# EUROPÄISCHE PATENTSCHRIFT

(11) **EP 4 575 090 B1**
(45) Veröffentlichungstag und Bekanntmachung des Hinweises auf die Patenterteilung: **11.02.2026**
(21) Anmeldenummer: 23020558.5
(22) Anmeldetag: 18.12.2023
(51) Int. Cl.: E01B 5/04, E01B 26/00, G09F 3/00, G09F 3/03, G09F 3/12, G09F 23/00, G06K 19/06, G06K 19/07, G06K 19/077, G06Q 10/06, G06Q 10/20

(54) **RILLENSCHIENE FÜR DIE BILDUNG VON VERKEHRSWEGEN FÜR SCHIENENFAHRZEUGE UND VERFAHREN ZUR IDENTIFIKATION VON RILLENSCHIENEN IN EINEM GLEIS**
GROOVED RAIL FOR THE FORMATION OF ROUTES FOR RAIL VEHICLES AND METHOD FOR IDENTIFYING GROOVED RAILS IN A TRACK
RAIL À RAINURE POUR LA FORMATION DE VOIES DE CIRCULATION POUR VÉHICULES FERROVIAIRES ET PROCÉDÉ D'IDENTIFICATION DE RAILS À RAINURE DANS UNE VOIE

(43) Veröffentlichungstag der Anmeldung: 25.06.2025
(73) Patentinhaber: voestalpine Rail Technology GmbH, 8700 Leoben (AT)
(72) Erfinder: PRETTNER, Lukas, 8724 Spielberg (AT); KANZIAN, Bernhard, 8700 Leoben (AT)
(74) Vertreter: SONN Patentanwälte GmbH & Co KG

(56) Entgegenhaltungen:
- EP-A1- 3 865 370
- EP-A1- 4 095 312
- EP-A1- 4 105 102
- CN-U- 218 616 666
- US-A1- 2010 264 222
- US-A1- 2012 257 195
- US-B2- 8 073 581

## Beschreibung

Die Erfindung betrifft eine Rillenschiene für die Bildung von Verkehrswegen für Schienenfahrzeuge gemäß dem Oberbegriff des Patentanspruchs 1.

Die Erfindung betrifft weiters ein Gleis umfassend wenigstens zwei Rillenschienen mit einer den Zwischenraum zwischen den zwei Rillenschienen abdeckenden mittleren Schieneneindeckung und mit an den Außenseiten an die Rillenschienen anschließenden äußeren Schieneneindeckungen, sowie ein Verfahren zur Identifikation von Rillenschienen in einem derartigen Gleis.

Es ist seit langer Zeit üblich, Schienen für verschiedenste Zwecke mit einer Kennzeichnung zu versehen. Bisherige Lösungen für die Schienenidentifikation greifen auf Walzzeichen und Warmstempelungen zurück, die jeweils erhaben bzw. vertieft die notwendigen Informationen wie Profil, Schienengüte, Hersteller und Produktionsjahr tragen. Diese Methoden ermöglichen zwar eine lückenlose Rückverfolgbarkeit der Schiene bis zum Stahlwerk, sie weisen jedoch wesentliche Nachteile auf. Die Warmstempelung kann bereits nach wenigen Jahren aufgrund von Korrosion unlesbar werden. Darüber hinaus sind beide Kennzeichnungen analog und bieten daher nur eingeschränkte Möglichkeiten für die digitale Erfassung, was die Integration in Infrastrukturdatenbanken erschwert.

Die digitale Kennzeichnung von Schienen bietet eine Fülle von Vorteilen, die sowohl die Effizienz als auch die Sicherheit im Gleisbau deutlich erhöhen können. Die automatisierte Erfassung von Schienen beim Einbau und deren digitale Aufnahme in Infrastrukturdatenbanken sind entscheidende Schritte zur Qualitätssicherung. Dieser Prozess minimiert menschliche Fehler bei der Dateneingabe, die oft mit manuellen Methoden verbunden sind.

Ein wesentlicher Vorteil der digitalen Kennzeichnung ist die Sicherstellung, dass die richtige Schiene - hinsichtlich Profil und Güte - genau dort zum Einsatz kommt, wo sie benötigt wird. Dies ist besonders wichtig, um den Einsatz von beispielsweise hochfesten Schienen in dafür vorgesehenen Streckenabschnitten zu gewährleisten und somit die strukturelle Integrität des Gleisbaus zu optimieren.

Die digitale Kennzeichnung sorgt auch dafür, dass die entsprechenden Schweißprozesse angewendet werden, die auf die spezifischen Eigenschaften der Schiene abgestimmt sind. Dies erhöht die Zuverlässigkeit der Schweißnähte und verlängert die Lebensdauer der Schienen.

Im Falle von Produktrückrufen oder Reklamationen ermöglicht die digitale Kennzeichnung eine schnelle und genaue Lokalisierung der betroffenen Schienen. Dies kann Ausfallzeiten minimieren und die Sicherheit im Schienenverkehr sicherstellen, indem potenziell fehlerhafte Teile zügig identifiziert und ersetzt werden.

Darüber hinaus unterstützt die digitale Erfassung ein umfassendes Produktbenchmarking, indem die Leistung der Schienen im tatsächlichen Anwendungsumfeld bewertet wird. Durch den Vergleich von erwarteten und tatsächlichen Leistungsdaten können Verbesserungen im Design und in der Materialauswahl vorgenommen werden.

Ein weiterer Nutzen liegt in der Unterstützung der Messtechnik. Digitale Kennzeichnungen können als Fixpunkte dienen, um Messsignale präzise zu stationieren, was die Genauigkeit von Vermessungsarbeiten im Gleisbau steigert.

Letztlich ermöglicht die digitale Kennzeichnung eine lückenlose Nachverfolgung der Produkthistorie. Dies ist nicht nur für Wartung und Reparaturen, sondern auch für die Wiederverwendung von Schienen in weniger beanspruchten Streckenabschnitten von Bedeutung. Die genaue Kenntnis der Lebenslaufdaten einer Schiene kann dazu beitragen, Ressourcen effizient zu nutzen und gleichzeitig die Umweltbelastung durch Neuproduktion zu verringern.

Die Veröffentlichungen US 2012/257195 A1, US 8,073,581 B2, CN 218616666 U, US 2010/264222 A1, EP 3 865 370 A1, EP 4 105 102 A1 sowie EP 4 095 312 A1 offenbaren Schienen mit Bezug zum Gegenstand der vorliegenden Erfindung.

Ein besonderes Problem für die Identifikation von Rillenschienen stellt die Eindeckung von Rillenschienen im Gleisbett dar. Nach Abschluss von Straßenbauarbeiten ist eine Identifikation der eingedeckten Schienen mit den traditionellen Methoden der Kennzeichnung wie Walzzeichen und Warmstempelung nicht mehr möglich. Die baulichen Veränderungen und die Abdeckung der Schiene mit Straßenbaumaterialien führen dazu, dass die aufgebrachten Kennzeichnungen verdeckt werden und somit für Wartungs- und Identifikationsprozesse unzugänglich sind. Dies erschwert nicht nur die regelmäßige Inspektion und Wartung, sondern beeinträchtigt auch die Rückverfolgbarkeit und das Management der Schieneninfrastruktur im städtischen Raum.

Auch im Falle einer digitalen Kennzeichnung erschwert die Eindeckung das Auslesen von Identifikationsträgern.

Das Ziel der Erfindung ist die Entwicklung einer automatisiert lesbaren Schienenkennzeichnung, die von Fahrzeugen wie Draisinen oder Messzügen während der Fahrt erfasst und präzise lokalisiert werden kann. Die Erfindung soll eine zuverlässige und genaue Identifikation und Verfolgung der Schieneninfrastruktur in Echtzeit ermöglichen.

Diese Aufgabe wird erfindungsgemäß durch eine Rillenschiene, welche die im Patentanspruch 1 angeführten Merkmale aufweist, gelöst.

Die Platzierung des Transponders ist hierbei so konzipiert, dass sie eine zuverlässige Kommunikation mit dem Lesegerät ermöglicht, selbst unter den anspruchsvollsten Bedingungen, wie sie beispielsweise in eingedeckten Gleisen vorliegen können. Auf Grund der Möglichkeit des drahtlosen Auslesens des RFID-Transponders kann dieser auch ohne Entfernung der bei Rillenschienen üblichen Schieneneindeckung abgefragt werden. Dies stellt sicher, dass die Schienenkennung über die gesamte Lebensdauer der Schiene hinweg erhalten bleibt und eine kontinuierliche, präzise Erfassung gewährleistet ist. Unter einer Schieneneindeckung bzw. einem eingedeckten Gleis ist hier generell ein Gleis zu verstehen, bei dem die Schienen mindestens auf einer Seite, insbesondere im Zwischenraum zwischen zwei benachbarten Schienen, eingedeckt sind, also durch eine Eindeckung zumindest teilweise angefüllt bzw. ausgefüllt sind, insbesondere so, dass eventuell vorhandene Schwellen des Gleises überdeckt sind und/oder dass das eingedeckte Gleis begehbar oder sogar von nicht schienengebundenen Fahrzeugen überfahrbar ist. Insbesondere kann das eingedeckte Gleis auch als sogenannte feste Fahrbahn ausgebildet sein bzw. eine solche aufweisen, also einen schotterlosen Oberbau aufweisen.

Erfindungsgemäß ist der Identifikationsträger am Fahrkopf oder am Leitkopf angeordnet. Dies bietet den Vorteil, dass der Transponder, insbesondere wenn er an der Außenseite oder Unterseite des Fahr- oder Leitkopfes angebracht ist, auch dann erfasst werden kann, wenn die Schiene in Materialien wie Asphalt, Beton oder Gummielemente eingebettet ist. Diese Positionierung nutzt den Umstand, dass der Fahrkopf oder Leitkopf häufig weniger von der Eindeckung betroffen ist und somit der Transponder für Erfassungsgeräte besser zugänglich bleibt. Eine solche Anbringung maximiert die Wahrscheinlichkeit, dass der Transponder über die gesamte Nutzungsdauer der Schiene hinweg lesbar bleibt und sichert so eine verlässliche digitale Identifikation auch in eingedeckten Gleissituationen.

Die Erfindung sieht die unmittelbare bzw. direkte Befestigung des Identifikationsträgers, der einen RFID-Transponder enthält, am Fahrkopf oder Leitkopf vor. Diese direkte Anbringung macht zusätzliche Haltevorrichtungen wie Klemmbacken oder Befestigungswinkel überflüssig. Diese Vereinfachung des Befestigungsprozesses führt zu einer Reduktion von Material- und Arbeitskosten sowie zu einer Verringerung der Komplexität im Montageprozess. Durch den erfindungsgemäßen Wegfall von separaten Haltevorrichtungen wird zudem das Risiko von Beschädigungen oder Lockerungen, die durch die dynamischen Kräfte des Schienenverkehrs entstehen können, minimiert. Die vereinfachte Montage fördert eine robuste und dauerhafte Anbindung des Transponders und trägt so zu einer zuverlässigeren Schienenidentifikation bei.

In einer bevorzugten Ausführung der Erfindung wird der Identifikationsträger stoffschlüssig mit dem Fahrkopf oder dem Leitkopf verbunden. Diese Art der Verbindung wird beispielsweise durch den Einsatz eines Montageklebers erreicht. Der Kleber ermöglicht eine feste und dauerhafte Verbindung des Transponders mit dem Metall der Schiene, was zu einer nahezu untrennbaren Einheit führt. Diese stoffschlüssige Befestigung ist besonders widerstandsfähig gegenüber äußeren Einflüssen wie Erschütterungen, Temperaturschwankungen und Feuchtigkeit, die im Eisenbahnbetrieb alltäglich sind. Dadurch wird eine langfristige Lesbarkeit und Funktionsfähigkeit des RFID-Transponders sichergestellt, ohne dass zusätzliche mechanische Halteelemente erforderlich sind, die potenziell eine Schwachstelle darstellen könnten.

Das Aufkleben des RFID-Transponders mittels Montagekleber erfolgt vorzugsweise auf Neuschienen in der Produktion.

In einer bevorzugten Ausführung der Erfindung wird ein besonders robuster Transponder verwendet, der mit einer Epoxid-Harz-Versiegelung ausgestattet ist, um einen umfassenden Schutz vor rauen Bau- und Umwelteinflüssen zu gewährleisten. Epoxidharz ist für seine hohe Widerstandsfähigkeit gegenüber chemischen Substanzen, extremen Temperaturen und mechanischen Belastungen bekannt. Durch die Versiegelung des Transponders mit diesem Material wird sichergestellt, dass die elektronischen Komponenten des Transponders vor Feuchtigkeit, Schmutz und korrosiven Stoffen geschützt sind, was seine Lebensdauer signifikant erhöht.

In einer bevorzugten Ausführung der Erfindung ist der Identifikationsträger so gestaltet, dass er zusätzlich zu einem RFID-Transponder auch eine optisch erfassbare Kennung besitzt. Diese Kennung kann in Form einer mehrstufigen Codierung realisiert sein, die auch ohne den Einsatz von RFID-Lesegeräten eine eindeutige Identifikation der Rillenschiene beim Einbau ermöglicht. Dies kann etwa durch eine Kombination aus alphanumerischen Zeichen, Barcodes oder QR-Codes umgesetzt werden, die mit bloßem Auge oder mit optischen Scannern gelesen werden können. Diese Art der Codierung bietet den Vorteil, dass Schienen identifiziert und zugeordnet werden können, selbst wenn die RFID-Technologie temporär nicht zur Verfügung steht oder in einer bestimmten Phase des Einbaus nicht genutzt wird. Damit erhöht sich die Flexibilität und Zuverlässigkeit im Identifikationsprozess während der verschiedenen Stadien des Gleisbaus und - betriebs.

Bevorzugt liegt die optisch erfassbare Kennung in Klarschrift und/oder als optoelektronisch lesbarer Code, wie z.B. als QR-Code, vor. Diese Dualität der Kennzeichnung ermöglicht eine vielseitige und redundante Erfassung. Während die Klarschrift eine schnelle visuelle Identifikation durch das Personal vor Ort erlaubt, bietet der QR-Code eine erweiterte Informationsdichte und kann mit einem Scanner oder sogar mit einem Smartphone ausgelesen werden, um detaillierte Daten zu der jeweiligen Schiene abzurufen. Diese Daten können Produktionsdetails, historische Wartungsinformationen und spezifische Schienenattribute enthalten.

Eine besonders bevorzugte Ausführung der Erfindung zeichnet sich durch eine dreistufige Identifikationsstruktur aus, die eine Kombination aus RFID für die berührungslose Erfassung, Data-Matrix-Code für die optoelektronische Datenerfassung und Seriennummer in Klarschrift für die visuelle Identifikation umfasst. Die Kombination dieser drei Identifikationselemente stellt sicher, dass die Schiene unter verschiedenen Bedingungen und mit unterschiedlichen Geräten erkannt werden kann.

Gemäß einer bevorzugten Weiterbildung der Erfindung ist vorgesehen, dass der Identifikationsträger in einem Abstand von mindestens 1,4 m von einem Schienenende der Rillenschiene angeordnet ist. Diese spezifische Platzierung des Transponders dient dazu, ihn vor den hohen Temperaturen und mechanischen Belastungen zu schützen, die beim Schweißprozess an den Schienenenden auftreten können. Des Weiteren trägt diese Anordnung dazu bei, mögliche Beschädigungen des Transponders während der Hebe- und Verladungsarbeiten zu verhindern, da die Enden der Schienen häufig Angriffspunkte für Hebezeuge darstellen.

In einer bevorzugten Ausführung der Erfindung wird die Position des Transponders durch eine Farbmarkierung am Schienenkopf hervorgehoben. Diese Farbmarkierung dient als visuelles Hilfsmittel, um die Sichtbarkeit des Transponders für Maschinenführer während des Einbau- oder Ausleseprozesses zu erhöhen. Dadurch wird das Risiko einer unbeabsichtigten Beschädigung durch Baumaschinen minimiert, da die Maschinenführer durch die auffällige Markierung auf den Transponder aufmerksam gemacht werden.

Die Erfindung betrifft gemäß einem zweiten Aspekt ein Gleis umfassend wenigstens zwei Rillenschienen nach dem ersten Aspekt der Erfindung, mit einer den Zwischenraum zwischen den zwei Rillenschienen abdeckenden mittleren Schieneneindeckung und mit an den Außenseiten an die Rillenschienen anschließenden äußeren Schieneneindeckungen. Die Eindeckung kann beispielsweise von einer Asphaltschicht gebildet sein, die direkt bis an die Schienenköpfe herangeführt wird und für eine gleichmäßige Oberfläche sorgt. Alternativ kann Beton oder Betonplatten verwendet werden.

Die Erfindung betrifft gemäß einem dritten Aspekt ein Verfahren zur Identifikation von Rillenschienen in einem Gleis nach den zweiten Aspekt der Erfindung, bei dem eine elektronische Schienenkennung mittels eines Lesegeräts aus einem am Fahrkopf oder am Leitkopf der Rillenschiene angeordneten RFID-Transponder drahtlos ausgelesen wird, wobei das Lesegerät an oder in einem das Gleis befahrenden Schienenfahrzeug angeordnet ist oder als handgeführtes Lesegerät ausgebildet ist und das Auslesen des RFID-Transponders ermöglicht, wobei das Auslesen im Falle eines an oder in einem das Gleis befahrenden Schienenfahrzeug angeordneten Lesegeräts während der Fahrt erfolgt.

Gemäß einer bevorzugten Ausbildung der Erfindung ist das Lesegerät am oder im Schienenfahrzeug derart angeordnet, dass eine Leseantenne des Lesegeräts in einer schräg zur Schienenhochachse orientierten Ebene liegt. Dies erweitert den Erfassungsbereich der Leseantenne in Richtung des Bereichs des Schienenstegs und des Schienenfußes, sodass die Zuverlässigkeit der Datenerfassung verbessert werden kann.

In bevorzugter Weise werden beim Auslesen der Schienenkennung Ortskoordinaten ermittelt, die der ausgelesenen Schienenkennung zugeordnet werden. Diese Funktion ermöglicht eine präzise Lokalisierung jeder einzelnen Schiene im Gleisnetz, was für Wartungsarbeiten, das Streckenmanagement und die Planung von Infrastrukturprojekten von Vorteil ist. Die Zuordnung von geografischen Daten zu spezifischen Schienenkennungen bildet die Grundlage für ein umfassendes Geoinformationssystem (GIS), das eine detaillierte und interaktive Kartierung der Schieneninfrastruktur ermöglicht und so zu effizienteren und zielgerichteten Instandhaltungsstrategien beiträgt, und zwar insbesondere dann, wenn die ausgelesene Schienenkennung ggf. gemeinsam mit den zugeordneten Ortskoordinaten an eine zentrale Datenbank übermittelt wird.

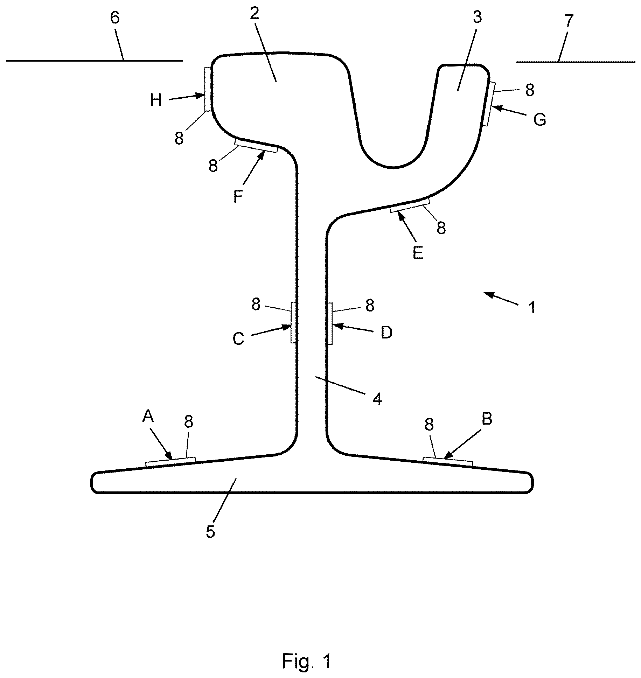

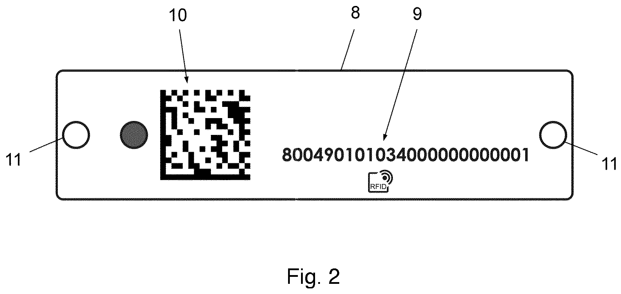

Die Erfindung wird nachfolgend anhand eines in der Zeichnung schematisch dargestellten Ausführungsbeispiels näher erläutert. In dieser zeigen Fig. 1 eine Rillenschiene im Querschnitt und Fig. 2 einen Identifikationsträger zur Anbringung an der Rillenschiene.

In Fig. 1 ist eine Rillenschiene 1 im Querschnitt dargestellt, die einen Schienenkopf mit einem Fahrkopf 2 und einem Leitkopf 3 sowie einen Schienensteg 4 und einen Schienenfuß 5 aufweist. Weiters ist eine Schieneneindeckung angedeutet, wobei eine mittlere Schieneneindeckung mit 6 und eine äußere Schieneneindeckung mit 7 bezeichnet ist.

Ein Identifikationsträger 8 umfassend einen eine elektronische Schienenkennung aufweisenden RFID-Transponder kann nun an verschiedenen Stellen der Rillenschiene 1 an dieser befestigt werden, und zwar vorzugsweise mittels eines Klebstoffs. Die alternativ vorgesehenen Anbringungsstellen sind in Fig. 1 mit den Buchstaben A-H bezeichnet. Wie ersichtlich, kann der Identifikationsträger 8 beispielsweise am Schienenfuß (Stelle A, B), am Schienensteg (Stelle C, D) oder aber erfindungsgemäß an der Unterseite des Leitkopfes (Stelle E), an der Außenseite des Leitkopfes (Stelle G), an der Unterseite des Fahrkopfes (Stelle F) oder an der Außenseite des Fahrkopfes (Stelle H) angebracht werden.

In Fig. 2 ist eine Draufsicht auf einen Identifikationsträger 8 dargestellt. Der Identifikationsträger 8 weist einen integrierten, eine elektronische Schienenkennung aufweisenden RFID-Transponder auf. Weiters umfasst der Identifikationsträger 8 eine Kennung in Form einer Klarschrift 9 und einen optoelektronisch lesbaren Code in Form eines QR-Codes 10. Der Identifikationsträger 8 kann stoffschlüssig oder unter Verwendung von Schrauben an der Rillenschiene befestigt werden, zu welchem Zweck der Identifikationsträger 8 mit Löchern 11 versehen ist.

## Patentansprüche

1. Rillenschiene (1) für die Bildung von Verkehrswegen für Schienenfahrzeuge umfassend einen Schienenfuß (5), einen Schienensteg (4) und einen Schienenkopf, der einen Fahrkopf (2) und einen Leitkopf (3) aufweist, die eine Fahrrille begrenzen, wobei ein Identifikationsträger (8) umfassend einen eine elektronische Schienenkennung aufweisenden RFID-Transponder am Schienenkopf angeordnet ist, **dadurch gekennzeichnet, dass** der Identifikationsträger (8) ohne zusätzliche Haltevorrichtungen wie Klemmbacken oder Befestigungswinkel unmittelbar am Fahrkopf (2) oder am Leitkopf (3) befestigt ist.

2. Rillenschiene nach Anspruch 1, **dadurch gekennzeichnet, dass** der Identifikationsträger (8) an einer Unterseite des Fahr- oder Leitkopfes (2,3) angeordnet ist.

3. Rillenschiene nach Anspruch 1, **dadurch gekennzeichnet, dass** der Identifikationsträger (8) an einer Außenseite des Fahr- oder Leitkopfes (2,3) angeordnet ist.

4. Rillenschiene nach einem der Ansprüche 1 bis 3, **dadurch gekennzeichnet, dass** der Identifikationsträger (8) stoffschlüssig am Fahrkopf (2) oder am Leitkopf (3) befestigt ist.

5. Rillenschiene nach einem der Ansprüche 1 bis 4, **dadurch gekennzeichnet, dass** der Identifikationsträger (8) wenigstens eine optisch erfassbare Kennung (9,10) aufweist.

6. Rillenschiene nach Anspruch 5, **dadurch gekennzeichnet, dass** die optisch erfassbare Kennung in Klarschrift (9) und/oder als optoelektronisch lesbarer Code (10), wie z.B. als QR-Code, vorliegt.

7. Rillenschiene nach einem der Ansprüche 1 bis 6, **dadurch gekennzeichnet, dass** der Identifikationsträger (8) in einem Abstand von mindestens 1,4 m von einem Schienenende der Rillenschiene (1) angeordnet ist.

8. Gleis umfassend wenigstens zwei Rillenschienen nach einem der Ansprüche 1 bis 7, mit einer den Zwischenraum zwischen den zwei Rillenschienen (1) abdeckenden mittleren Schieneneindeckung (6) und mit an den Außenseiten an die Rillenschienen anschließenden äußeren Schieneneindeckungen (7).

9. Verfahren zur Identifikation von Rillenschienen (1) in einem Gleis nach Anspruch 8, bei dem eine elektronische Schienenkennung mittels eines Lesegeräts aus einem am Fahrkopf (2) oder am Leitkopf (3) der Rillenschiene (1) angeordneten RFID-Transponder drahtlos ausgelesen wird, wobei das Lesegerät an oder in einem das Gleis befahrenden Schienenfahrzeug angeordnet ist oder als handgeführtes Lesegerät ausgebildet ist und das Auslesen des RFID-Transponders ermöglicht, wobei das Auslesen im Falle eines an oder in einem das Gleis befahrenden Schienenfahrzeug angeordneten Lesegeräts während der Fahrt erfolgt.

10. Verfahren nach Anspruch 9, **dadurch gekennzeichnet, dass** das Lesegerät am oder im Schienenfahrzeug derart angeordnet ist, dass eine Leseantenne des Lesegeräts in einer schräg zur Schienenhochachse orientierten Ebene liegt.

11. Verfahren nach Anspruch 9 oder 10, **dadurch gekennzeichnet, dass** beim Auslesen der Schienenkennung Ortskoordinaten ermittelt werden, die der ausgelesenen Schienenkennung zugeordnet werden.

12. Verfahren nach Anspruch 9, 10 oder 11, **dadurch gekennzeichnet, dass** die ausgelesene Schienenkennung ggf. gemeinsam mit den zugeordneten Ortskoordinaten an eine zentrale Datenbank übermittelt wird.

## Claims

1. Grooved rail (1) for forming traffic routes for rail vehicles comprising a rail foot (5), a rail web (4), and a rail head, which comprises a running head (2) and a guide head (3) that delimit a groove, wherein an identification carrier (8) comprising an RFID transponder comprising an electronic rail identifier is arranged on the rail head, **characterized in that** the identification carrier (8) is fastened directly to the running head (2) or to the guide head (3) without additional holding devices such as clamping jaws or fastening brackets.

2. Grooved rail according to claim 1, **characterized in that** the identification carrier (8) is arranged on an underside of the running or guide head (2,3).

3. Grooved rail according to claim 1, **characterized in that** the identification carrier (8) is arranged on an outer side of the running or guide head (2,3).

4. Grooved rail according to any one of claims 1 to 3, **characterized in that** the identification carrier (8) is materially bonded to the running head (2) or to the guide head (3).

5. Grooved rail according to any one of claims 1 to 4, **characterized in that** the identification carrier (8) comprises at least one optically detectable identifier (9,10).

6. Grooved rail according to claim 5, **characterized in that** the optically detectable identifier is present in plain text (9) and/or as an optoelectronically readable code (10), such as, for example, a QR code.

7. Grooved rail according to any one of claims 1 to 6, **characterized in that** the identification carrier (8) is arranged at a distance of at least 1.4 m from a rail end of the grooved rail (1).

8. Track comprising at least two grooved rails according to any one of claims 1 to 7, with a central rail covering (6) covering the intermediate space between the two grooved rails (1) and with outer rail coverings (7) adjoining the grooved rails on the outer sides.

9. Method for identifying grooved rails (1) in a track according to claim 8, in which an electronic rail identifier is wirelessly read by means of a reading device from an RFID transponder arranged on the running head (2) or on the guide head (3) of the grooved rail (1), wherein the reading device is arranged on or in a rail vehicle traveling on the track or is designed as a handheld reading device and enables the reading of the RFID transponder, wherein, in the case of a reading device arranged on or in a rail vehicle traveling on the track, the reading takes place during travel.

10. Method according to claim 9, **characterized in that** the reading device is arranged on or in the rail vehicle in such a way that a reading antenna of the reading device lies in a plane oriented obliquely with respect to the vertical rail axis.

11. Method according to claim 9 or 10, **characterized in that**, when reading the rail identifier, location coordinates are determined, which are assigned to the read rail identifier.

12. Method according to claim 9, 10 or 11, **characterized in that** the read rail identifier, if applicable together with the assigned location coordinates, is transmitted to a central database.

## Revendications

1. Rail à gorge (1) pour former des voies de circulation pour véhicules ferroviaires comprenant un patin de rail (5), une âme de rail (4), et une tête de rail, qui comprend une tête de roulement (2) et une tête de guidage (3) délimitant une gorge, dans lequel un support d'identification (8) comprenant un transpondeur RFID comprenant un identifiant électronique de rail est disposé sur la tête de rail, **caractérisé en ce que** le support d'identification (8) est fixé directement à la tête de roulement (2) ou à la tête de guidage (3) sans dispositifs de maintien supplémentaires tels que des mâchoires de serrage ou des supports de fixation.

2. Rail à gorge selon la revendication 1, **caractérisé en ce que** le support d'identification (8) est disposé sur une face inférieure de la tête de roulement ou de guidage (2, 3).

3. Rail à gorge selon la revendication 1, **caractérisé en ce que** le support d'identification (8) est disposé sur une face extérieure de la tête de roulement ou de guidage (2, 3).

4. Rail à gorge selon l'une des revendications 1 à 3, **caractérisé en ce que** le support d'identification (8) est fixé de manière matérielle à la tête de roulement (2) ou à la tête de guidage (3).

5. Rail à gorge selon l'une des revendications 1 à 4, **caractérisé en ce que** le support d'identification (8) comprend au moins un identifiant optiquement détectable (9, 10).

6. Rail à gorge selon la revendication 5, **caractérisé en ce que** l'identifiant optiquement détectable est présent en texte clair (9) et/ou sous forme de code lisible optoélectroniquement (10), tel que, par exemple, un code QR.

7. Rail à gorge selon l'une des revendications 1 à 6, **caractérisé en ce que** le support d'identification (8) est disposé à une distance d'au moins 1,4 m d'une extrémité de rail du rail à gorge (1).

8. Voie comprenant au moins deux rails à gorge selon l'une des revendications 1 à 7, avec un revêtement central de rail (6) couvrant l'espace intermédiaire entre les deux rails à gorge (1) et avec des revêtements extérieurs de rail (7) adjacents aux rails à gorge sur les côtés extérieurs.

9. Procédé d'identification des rails à gorge (1) dans une voie selon la revendication 8, dans lequel un identifiant électronique de rail est lu sans fil au moyen d'un dispositif de lecture à partir d'un transpondeur RFID disposé sur la tête de roulement (2) ou sur la tête de guidage (3) du rail à gorge (1), dans lequel le dispositif de lecture est disposé sur ou dans un véhicule ferroviaire circulant sur la voie ou est conçu comme un dispositif de lecture portable et permet la lecture du transpondeur RFID, dans lequel, dans le cas d'un dispositif de lecture disposé sur ou dans un véhicule ferroviaire circulant sur la voie, la lecture a lieu pendant le déplacement.

10. Procédé selon la revendication 9, **caractérisé en ce que** le dispositif de lecture est disposé sur ou dans le véhicule ferroviaire de telle sorte qu'une antenne de lecture du dispositif de lecture se trouve dans un plan orienté obliquement par rapport à l'axe vertical du rail.

11. Procédé selon la revendication 9 ou 10, **caractérisé en ce que**, lors de la lecture de l'identifiant de rail, des coordonnées de localisation sont déterminées, qui sont associées à l'identifiant de rail lu.

12. Procédé selon la revendication 9, 10 ou 11, **caractérisé en ce que** l'identifiant de rail lu, le cas échéant avec les coordonnées de localisation associées, est transmis à une base de données centrale.
